# EUROPEAN PATENT SPECIFICATION

(11) **EP 1 922 574 B1**
(45) Date of publication and mention of the grant of the patent: **10.10.2018**
(21) Application number: 06790122.3
(22) Date of filing: 30.08.2006
(51) Int. Cl.: F21V 8/00

(54) **LED BACKLIGHT FOR FLAT PANEL DISPLAY**
LED HINTERGRUNDBELEUCHTUNG FÜR FLACHBILDSCHIRME
DISPOSITIF DE RÉTRO-ÉCLAIRAGE À LED D ÉCRAN PLAT

(30) Priority: 31.08.2005 US 713212 P
(43) Date of publication of application: 21.05.2008
(73) Proprietor: Universal Avionics Systems Corporation, Tucson, AZ 85706 (US)
(72) Inventor: DUNN, William R., Alpharetta, Georgia 30202 (US)
(74) Representative: Wynne-Jones IP Limited
(86) International application number: PCT/US2006/034101
(87) International publication number: WO 2007/027939

(56) References cited:
- WO-A1-99/51914
- US-A1- 2004 130 884
- US-A1- 2005 001 952
- US-A1- 2005 047 110

## Description

### RELATED APPLICATION

This application claims the benefit of and priority to U.S. Provisional Application Serial No. 60/713,212, filed August 31, 2005.

### BACKGROUND

### 1. Field

The present disclosure relates to a backlight for a flat panel display, especially a liquid crystal display (LCD). In a preferred embodiment, the light source for the backlight comprises a plurality of light emitting diodes (LEDs) positioned around a periphery of the backlight device. The device is defined in the claims appended hereto.

### 2. General Background

The liquid crystal flat panel commonly used in a variety of display devices does not generate light of itself. All light used in the display originates as reflected or transmitted light that passes through the liquid crystal elements in the panel, where the specific color of the individual picture elements ("pixels") is imparted by color filters and the brightness is determined by the electrical state of the liquid crystal material. In many embodiments, the transmitted light is provided by a backlight. Many embodiments use a fluorescent backlight, commonly a cold cathode fluorescent lamp (CCFL) located beneath the liquid crystal flat panel. Other embodiments use one or more LEDs positioned beneath the liquid crystal flat panel. In either of these cases, at least one plate for collecting light from a light source and diffusively emitting it is placed below the liquid crystal flat panel.

There are known problems in uniformly distributing the light. There are also problems associated with the thickness of the collection and distribution plate or plates required when the light source is a fluorescent tube, because of the shape factor of the light source. LED light sources also pose problems, due to higher heat generation and their inherent conical light emission pattern from what is effectively a point source.

Other differences exist between CCFL and LED light sources in backlight assemblies. For example, an LED requires only low-voltage DC power source and it has a very long life, while a CCFL requires a higher voltage AC source and has a shorter life.

As a result of these problems and differences, there is significant room for improvement in the art of providing an effective backlight source for a liquid crystal flat panel display.

### SUMMARY

The present disclosure, as described below and as shown in the accompanying drawings, provides an improved backlight arrangement for a flat panel display and especially for a liquid crystal flat panel display.

In particular, the backlight for a flat panel display preferably includes a light guide having a shape complementary to a visible surface of a flat panel display positioned beneath the display. The light guide has a first side edge. An array of light emitting diodes (LEDs) is arranged on a flexible printed circuit board and positioned in registry against the side edge of the light guide. A second array of LEDs may be arranged along a second side edge of the light guide to enhance the visibility and uniformity of illumination to the flat panel display.

### DRAWINGS

The above-mentioned features and objects of the present disclosure will become more apparent with reference to the following description taken in conjunction with the accompanying drawings wherein like reference numerals denote like elements and in which:
**FIGURE 1** is a side elevation view of a flat panel display incorporating an embodiment of the present disclosure; and
**FIGURE 2** is a side elevation view of the disclosure, taken along line 2-2 of **Figure 1****.**

### DETAILED DESCRIPTION

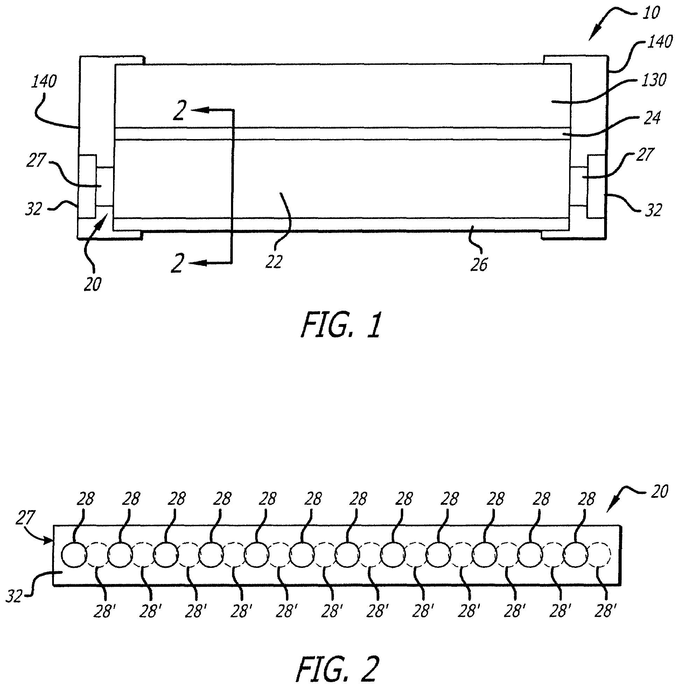

FIGURE 1 shows a side elevation view of a flat panel display **10** incorporating an embodiment **20** of the back light assembly of the present disclosure. In addition to the back light assembly, the flat panel display **10** is shown with a liquid crystal display assembly **130** that would be known to one skilled in the art. It is understood that other types of display that require a back light assembly **20** can be readily substituted for the liquid crystal display assembly **130** that is illustrated and the appropriate and predictable result will obtain. For this reason, the light crystal display assembly **130** is depicted without disclosing the particular details, such as polarizing layers and the like, as their operation will not be directly affected by the back light assembly embodiment **20**. Also shown in Figure 1 is a housing **140** that encloses the back light assembly **20** and liquid crystal display assembly **130** and maintains them in relative position to each other.

Addressing the present disclosure directly, the back light assembly **20** has a light guide **22**. In the exemplary embodiment, the light guide **22** is a rectangular body with a top surface and a bottom surface and a lateral periphery comprising four side edges. In a typical embodiment, the edges that define the top and bottom surfaces will each be much larger than the height of the side edges. Also, the top and bottom surfaces are shown as being parallel to each other, but there is no reason to expect that the present disclosure device would not work in a wedge-shaped light guide, that is, in conjunction with a light guide where the side edges do not all have the same height. The light transmissive properties of the light guide **22** are very important to its operation. A polymeric material such as poly(methyl methacrylate) or polycarbonate is commonly selected because of the light transmission provided thereby.

In the illustrated embodiment, the back light assembly also includes additional plates or coatings. Particularly, a diffuser plate **24** is shown interposed between the light guide **22** and the liquid crystal display assembly **130**. The diffuser plate **24** will be known to persons of skill in this art, as it is conventionally used in association with CCFL backlights. The diffuser plate **24**, as the name indicates, provides a last opportunity for diffusing the light emitted through the top surface of the light guide **22**. The diffuser **24** completes the homogenization of the luminance and chrominance uniformity, as well as provides either a collimated or Lambertian radiation pattern, which may be desired for a particular application.

On the opposing bottom surface of the light guide **22**, a reflective plate or coating **26** is provided, so that light does not emerge from the bottom surface, but is instead reflected back into the light guide. A typical reflective plate **26** is a layer of white poly(ethylene terephthalate). In some embodiments (not illustrated here), a coating will be applied to the bottom surface of the light guide **22** in lieu of a reflective plate. While described in more detail below, Figure 1 also shows an LED array **27** and a flexible printed circuit board **32** to which the LEDs may be mounted and is used to power the LEDs arranged along opposite side edges of the light guide.

A further feature of the present disclosure is seen by referring to Figure 2, which is a side elevation view of a side edge of the back light assembly **20** taken along line 2-2 in Figure 1. In this view, a plurality of the LEDs **28** are depicted as being disposed along the length of the light guide. These LEDs **28** are preferably aligned in a row, i.e., linear array. In the illustrated embodiment, the LEDs **28** which are circular when viewed head on, are spaced apart from each other by less than the diameter of an individual LED. When the LEDs **28** are aligned in a row, the light guide **22** can be as thin (have a height as low as) the diameter of the LED used. This will, in most cases, provide a thinner light guide **22** than can be used with almost any commercially available CCFL. In the less likely situation of a light guide that is thicker than the diameter of the LED used, it may be possible to displace alternating LEDs upwardly and downwardly.

In a typical anticipated embodiment of the present disclosure, the LEDs **28** are aligned in this manner along an opposing pair of the side edges, with the alignments staggered on the respective side edges so that each LED on a first side edge is centred between a pair of LEDs on the other side edge. To illustrate this, a series of LEDs **28'** are arranged along the opposing side edge of the light guide **22**, and shown in phantom lines with respect to the LEDs **28** of Figure 2. The flexible printed circuit boards may be separate or interconnected as an elongated board with portions having the LEDs thereon partitioned along the opposite side edges of the light guide. The LEDs **28, 28'** used in this application should have a high flux output. One such LED is commercially available as a super luminosity white LED, LMFL3500 from Lumimicro Company, Ltd. of South Korea. It has been shown that an application using **44** such LEDs on a pair of opposing side edges (total of 88 LEDs) provided 1000 nits of light at 11.4 watts of power input.

The flexible printed circuit ("FPC") board **32** is shown in association with the LEDs **28** as an appropriate mounting medium for the LEDs. Copper cladding on the FPC is also especially appropriate as a sink for removing heat generated by the LEDs in operation. Further, extended wing-like portions on the FPC may be provided to facilitate further heat removal.

In a typical arrangement as described so far, LEDs **28, 28'** are arranged on an opposing pair of the side edges, leaving another pair of opposing side edges without any LEDs. These side edges should be coated with a reflective material or have a thin reflective layer attached to them, so that light striking them is reflected back in to the light guide **22**. On the two opposing side edges having LEDs **28**, the portions not having an LED pointed directly thereat should be similarly provided with a reflective coating. In one embodiment, a template with cutouts corresponding to the surface shape of each LED can be placed on the FPC board to provide this reflective coating. In a particularly useful embodiment, the template can assist heat removal if it is formed from a thermally conductive material.

Of course, providing electrical power to the plurality of LEDs **28, 28'** will be known to one of skill in this art.

In another application of the present disclosure, a retrofit to an existing flat panel display that uses at least one CCFL along a side edge can be accomplished by removing the reflectors mounted outboard of the CCFL, removing the thermal core, removing the CCFLs, and mounting an FPC board with the LEDs mounted thereon along the side edges of the light guide that formerly held or abutted the CCFLs.

While the apparatus and method have been described in terms of what are presently considered to be the most practical and preferred embodiments, it is to be understood that the disclosure need not to be limited to the disclosed embodiments. It is intended to cover various modifications and similar arrangements included within the scope of the claims, the scope of which should be accorded the broadest interpretation so as to encompass all such modifications and similar structures. The present disclosure includes any and all embodiments of the following claims.

## Claims

1. A liquid crystal flat panel display assembly (130) comprising:
a liquid crystal flat panel display (10);
a light guide (22) having a shape complementary to at least a portion of the shape of the display beneath the display;
a first plurality of LEDs (28) each comprising a diameter, spaced apart from each other by less than said diameter along and against a first side edge of the light guide for directing light into the light guide; and
a second plurality of LEDs (28') arranged along an opposite second side edge of the light guide, wherein LEDs in the second plurality of LEDs are offset from LEDs in the first plurality of LEDs.

2. The display assembly of claim 1, further comprising a diffuser plate (24) sandwiched between the light guide and the liquid crystal display.

3. The display assembly of claim 1 wherein the first plurality of LEDs are fastened to a flexible printed circuit board (32) and faced against the light guide.

4. The display assembly of claim 1 wherein the light guide has a reflective coating (26) applied to a bottom surface thereof.

5. The display assembly of claim 3 wherein the flexible printed circuit board includes a heat sink for dissipation of heat generated by the first plurality of LEDs.

6. The backlight according to claim 1, further comprising a light reflective coating on the first and second side edges, only between adjacent LEDs.

## Patentansprüche

1. Flüssigkristall-Flachbildschirmanzeigeanordnung (130), umfassend:
eine Flüssigkristall-Flachbildschirmanzeige (10);
einen Lichtleiter (22) mit einer Form, die zu mindestens einem Abschnitt der Form der Anzeige komplementär ist, unterhalb der Anzeige;
eine erste Mehrzahl von LEDs (28), die jeweils einen Durchmesser aufweisen und um weniger als diesen Durchmesser entlang und gegen eine(r) erste(n) Seitenkante des Lichtleiters voneinander beabstandet sind, zum Leiten von Licht in den Lichtleiter; und
eine zweite Mehrzahl von LEDs (28'), die entlang einer gegenüberliegenden zweiten Seitenkante des Lichtleiters angeordnet sind, wobei LEDs in der zweiten Mehrzahl von LEDs von LEDs in der ersten Mehrzahl von LEDs versetzt sind.

2. Anzeigeanordnung nach Anspruch 1, die ferner eine Streuplatte (24) umfasst, die sandwichartig zwischen dem Lichtleiter und der Flüssigkristallanzeige angeordnet ist.

3. Anzeigeanordnung nach Anspruch 1, bei der die erste Mehrzahl von LEDs an einer flexiblen Leiterplatte (32) angebracht ist und gegen den Lichtleiter gerichtet ist.

4. Anzeigeanordnung nach Anspruch 1, bei welcher der Lichtleiter eine reflektierende Beschichtung (26) aufweist, die auf einer unteren Oberfläche davon aufgebracht ist.

5. Anzeigeanordnung nach Anspruch 3, bei der die flexible Leiterplatte einen Kühlkörper zum Abführen von Wärme umfasst, die durch die erste Mehrzahl von LEDs erzeugt worden ist.

6. Hintergrundbeleuchtung nach Anspruch 1, die ferner eine lichtreflektierende Beschichtung auf der ersten und zweiten Seitenkante nur zwischen angrenzenden LEDs umfasst.

## Revendications

1. Ensemble écran plat à cristaux liquides (130) comprenant :
un écran plat à cristaux liquides (10) ;
un guide de lumière (22) ayant une forme complémentaire d'au moins une partie de la forme de l'écran sous l'écran ;
une première pluralité de DEL (28) ayant chacune un diamètre, espacées les unes des autres d'une distance inférieure audit diamètre le long et contre un premier bord latéral du guide de lumière pour diriger de la lumière dans le guide de lumière ; et
une seconde pluralité de DEL (28') agencées le long d'un second bord latéral opposé du guide de lumière, des DEL dans la seconde pluralité de DEL étant décalées vis-à-vis de DEL dans la première pluralité de DEL.

2. Ensemble écran selon la revendication 1, comprenant en outre une plaque de diffusion (24) prise en sandwich entre le guide de lumière et l'écran à cristaux liquides.

3. Ensemble écran selon la revendication 1, dans lequel la première pluralité de DEL sont fixées à une carte de circuits imprimés souple (32) et faisant face au guide de lumière.

4. Ensemble écran selon la revendication 1, dans lequel le guide de lumière a un revêtement réfléchissant (26) appliqué sur une surface inférieure de celui-ci.

5. Ensemble écran selon la revendication 3, dans lequel la carte de circuits imprimés souple comprend un dissipateur de chaleur pour la dissipation de chaleur générée par la première pluralité de DEL.

6. Ensemble écran selon la revendication 1, comprenant en outre un revêtement de réflexion de lumière sur les premier et second bords latéraux, seulement entre des DEL adjacentes.
